# EUROPÄISCHE PATENTSCHRIFT

(11) **EP 2 848 709 B1**
(45) Veröffentlichungstag und Bekanntmachung des Hinweises auf die Patenterteilung: **04.03.2020**
(21) Anmeldenummer: 13184274.2
(22) Anmeldetag: 13.09.2013
(51) Int. Cl.: C22C 18/00, C22C 21/00

(54) **Verfahren zum Herstellen eines mit einem metallischen, vor Korrosion schützenden Überzug versehenen Stahlbauteils und Stahlbauteil**
Method for producing a steel component with an anti-corrosive metal coating and steel component
Procédé de fabrication d'un composant en acier revêtu d'une coiffe métallique protégeant de la corrosion et composant en acier

(43) Veröffentlichungstag der Anmeldung: 18.03.2015
(73) Patentinhaber: ThyssenKrupp Steel Europe AG, 47166 Duisburg (DE)
(72) Erfinder: Köyer, Maria, 44143 Dortmund (DE); Sikora, Sascha, 44534 Lünen (DE); Ruthenberg, Manuela, 44143 Dortmund (DE); Banik, Janko, 58762 Altena (DE); Schulz, Jennifer, 59427 Unna (DE)
(74) Vertreter: Cohausz & Florack

(56) Entgegenhaltungen:
- EP-A1- 1 225 246
- EP-A2- 0 480 122
- WO-A1-2008/025066
- DE-A1-102009 007 909
- DE-A1-102010 017 354
- DE-A1-102010 030 465
- DRILLET P ET AL: "Study of cracks propagation inside the steel on press hardened steel zinc based coatings", METALLURGIA ITALIANA, ASSOCIAZIONE ITALIANA DI METALLURGIA, MILAN, IT, Bd. 104, Nr. 1, 1. Januar 2012 (2012-01-01), Seiten 3-8, XP009176187, ISSN: 0026-0843

## Beschreibung

Die Erfindung betrifft ein Verfahren zum Herstellen eines mit einem metallischen, vor Korrosion schützenden Überzug versehenen Stahlbauteils durch Formen eines aus einem Mn-Stahl bestehenden Stahlflachproduktes, das vor dem Formen des Stahlbauteils mit einem Aluminium-Zink-Legierungsüberzug versehen wird.

Wenn hier von "Stahlflachprodukten" die Rede ist, so sind damit Stahlbänder, Stahlbleche oder daraus gewonnene Platinen und desgleichen gemeint

Um die im modernen Karosseriebau geforderte Kombination aus geringem Gewicht, maximaler Festigkeit und Schutzwirkung zu bieten, werden heutzutage in solchen Bereichen der Karosserie, die im Fall eines Crashs besonders hohen Belastungen ausgesetzt sein können, aus hochfesten Stählen warmpressgeformte Bauteile eingesetzt.

Beim Warmpresshärten, auch Warmumformen genannt, werden Stahlplatinen, die von kalt- oder warmgewalztem Stahlband abgeteilt sind, auf eine in der Regel oberhalb der Austenitisierungstemperatur des jeweiligen Stahls liegende Verformungstemperatur erwärmt und im erwärmten Zustand in das Werkzeug einer Umformpresse gelegt. Im Zuge der anschließend durchgeführten Umformung erfährt der Blechzuschnitt bzw. das aus ihm geformte Bauteil durch den Kontakt mit dem kühlen Werkzeug eine schnelle Abkühlung. Die Abkühlraten sind dabei so eingestellt, dass sich im Bauteil Härtegefüge ergibt.

Ein typisches Beispiel für einen für das Warmpresshärten geeigneten Stahl ist unter der Bezeichnung "22MnB5" bekannt und im Stahlschlüssel 2004 unter der Werkstoffnummer 1.5528 zu finden.

Den Vorteilen der bekannten für das Warmpresshärten besonders geeigneten Mangan-Bor-Stähle steht in der Praxis der Nachteil gegenüber, dass manganhaltige Stähle im Allgemeinen unbeständig gegen Nasskorrosion und nur schwer zu passivieren sind. Diese im Vergleich zu niedriger legierten Stählen bei Einwirken erhöhter Chloridionen-Konzentrationen starke Neigung zu lokal zwar begrenzter, jedoch intensiver Korrosion macht die Verwendung von zur Werkstoffgruppe der hochlegierten Stahlbleche gehörenden Stählen gerade im Karosseriebau schwierig. Zudem neigen manganhaltige Stähle zu Flächenkorrosion, wodurch das Spektrum ihrer Verwendbarkeit ebenfalls eingeschränkt wird.

Ferner ist aus Untersuchungen bekannt, dass bei Mn-B-Vergütungsstählen für komplexe crashrelevante Strukturbauteile in Fahrzeugkarosserien unter ungünstigen Bedingungen, z.B. bei erhöhtem Wasserstoffeintrag und bei Vorliegen erhöhter Zugspannungen, während der Fertigung oder der weiteren Verarbeitung dieser Stähle potentiell das Risiko einer Wasserstoffversprödung bzw. die Gefahr des Auftretens einer wasserstoffunterstützten verzögerten Rissbildung besteht. Der Wasserstoffeintrag wird durch die höhere Aufnahmefähigkeit des Stahlsubstrats im austenitischen Gefügezustand während der Glühbehandlung begünstigt.

Im Stand der Technik existieren verschiedene Vorschläge, die darauf abzielen, die Wasserstoffaufnahme von manganhaltigen Stählen während des temperierten Zustandes zu reduzieren bzw. auch solche Stähle mit einem metallischen Überzug zu versehen, der den Stahl vor korrosivem Angriff schützt. Dabei werden aktive und passive Korrosionsschutzsysteme unterschieden.

Aktive Korrosionsschutzsysteme werden üblicherweise durch kontinuierliches Aufbringen eines zinkhaltigen Korrosionsschutzüberzuges hergestellt. Passive Korrosionsschutzsysteme werden dagegen typischerweise durch Aufbringen eines aluminiumbasierten Überzuges, der eine gute Barrierewirkung bezüglich korrosiver Angriffe bietet, hergestellt.

Bei bekannten metallischen, zinkhaltigen Korrosionsschutzbeschichtungen gibt es negative und positive Aspekte.

Bei einem aus der EP 2 290 133 A1 bekannten Verfahren zum Herstellen eines mit einem metallischen Korrosionsschutz versehenen Stahlbauteils wird ein Zink-Nickel-Legierungsüberzug elektrolytisch auf einem Stahlband abgeschieden. Aufgrund des elektrolytischen Beschichtungsprozesses können nur geringe Bandgeschwindigkeiten erzielt werden, was die Herstellkosten anhebt. Durch eingelagerte Zinkphasen wird allerdings ein aktiver Korrosionsschutz nach der Warmumformung (Warmpresshärtung) sichergestellt. Im Vergleich zu mittels Feuerbeschichtung hergestellten zinkhaltigen Korrosionsschutzüberzügen existiert nach Standardparametern der SEP 1245 für das Widerstandspunktschweißen ein größerer Schweißbereich.

Stahlplatinen mit zinkbasierten Korrosionsschutzüberzügen, die einen hohen Zinkanteil im Bereich von mindestens 85 Gew.-% und maximal 98 Gew.-% aufweisen und mittels Feuerbeschichtungsanlagen auf ein zu beschichtendes Stahlband aufgebracht werden, lassen sich nur im kostenintensiven indirekten Warmumformprozess verarbeiten. Die bei Stahlbauteilen mit solchen zinkbasierten Korrosionsschutzüberzügen erzielbaren Schweißbereiche nach SEP 1245 für das Widerstandspunktschweißen nach Warmumformung liegen auf einem sehr geringen Niveau. Bedingt durch die relativ niedrige Schmelztemperatur dieses Beschichtungsmaterials werden geringe Badtemperaturen gefahren, was die Herstellkosten der zinkbasierten Beschichtung im Vergleich zu denjenigen einer AlSi-Beschichtung senkt bzw. relativ günstig macht. Jedoch besteht bei solchen zinkbasierten Beschichtungen aufgrund ihrer niedrigen Schmelztemperatur ein hohes Risiko einer zinkinfiltrierten Rissbildung (Flüssigphasenversprödung). Darüber hinaus werden die für das Verdampfungsverhalten positiven Oxidphasen (in der Regel Aluminiumoxid) typischerweise an der Oberfläche nach dem Presshärten gezielt entfernt. Hierdurch liegt in der Regel ein im Wesentlichen reiner Zink-Eisen-Überzug an dem pressgehärteten Bauteil vor.

Beim ebenfalls bekannten Galvannealing-Prozess wird der Zinküberzug eines Stahlbandes durch einen zusätzlichen Glühschritt in eine Zink-Eisen-Legierungschicht umgewandelt, um die Eisenkonzentration im Überzug auf mehr als 40 Gew.-% zu erhöhen. Solche für die direkte Warmumformung mit Eisen angereicherten Zinküberzüge haben jedoch nur über ein kleines zeitliches Verarbeitungsfenster in der Warmumformung einen aktiven Korrosionsschutz. Bauteile, die zu lange erwärmt worden sind, bieten keinen aktiven Korrosionsschutz mehr. Bei zu kurzen Prozesszeiten kann es, wie auch bei anderen zinkbasierten Korrosionsschutzüberzügen, wiederum zu einer zinkinfiltrierten Rissbildung kommen. Ferner werden die für das Verdampfungsverhalten positiven Oxidphasen (in der Regel Aluminiumoxid) an der Oberfläche nach dem Presshärten auch beim Galvannealing-Prozess typischerweise entfernt. Somit liegt in der Regel ein im Wesentlichen reiner Zink-Eisen-Überzug an dem pressgehärteten Bauteil vor.

Auch bei bisherigen aluminiumbasierten Korrosionsschutzüberzügen gibt es mehrere negative Aspekte. So ist der Energieverbrauch einer Feuerbeschichtungsanlage zur Herstellung von AlSi-Beschichtungen aufgrund der hohen Schmelztemperatur des Beschichtungsmaterials relativ groß. Darüber hinaus können diese Beschichtungen auf Mangan-Bor-Stählen nur im gewissen Umfang kalt umgeformt werden. Aufgrund einer harten intermetallischen Fe-Al-Si-Phase kommt es bei Kaltumformprozess zu Abplatzungen der Beschichtung. Hierdurch werden Umformgrade eingeschränkt. Die AlSi-Beschichtungen erfordern daher regelmäßig eine direkte Warmumformung. In Kombination mit einer kathodischen Tauchlackierung, die eine gute Haftung der Lackschicht auf der Oberfläche der AlSi-Beschichtung ermöglicht, lässt sich eine gute Barrierewirkung bezüglich korrosiver Angriffe erzielen. Des Weiteren ist bei dieser Beschichtungsvariante der Wasserstoffeintrag in den Stahlwerkstoff zu berücksichtigen, der bei ungünstigen Prozessbedingungen die Nutzung einer Taupunktregelung am Durchlaufofen für den Presshärteprozess erforderlich machen kann. Der mit der Taupunktregelung verbundene Energieverbrauch verursacht zusätzliche Kosten in der Bauteilherstellung.

Das Dokument "Study of cracks propagation inside the steel on press hardened steel zinc based coatings" Drillet P. et al., METALLURIGIA ITALIANA, ASSOCIAZIONE ITALIANA DI METALLURIGIA, MILAN, IT, Bd. 104, Nr. 1, 1. Januar 2012, ISSN:0026-0843) beschäftigt sich mit der Herstellung von Stahlbauteilen durch Warmumformen (Presshärten) von Stahlplatinen die eine Beschichtung auf Zinkbasis aufweisen. In diesem Dokument geht es um die Vermeidung einer Rissbildung während des Warmumformens. Eine chemische Zusammensetzung der Beschichtung auf Zinkbasis lässt sich dem Dokument nicht entnehmen.

Die EP 1 225 246 A1 offenbart ein Stahlmaterial mit einem Korrosionsschutzüberzug aus einer Zn-Al-Mg-Si-Legierung, die 45-70 Gew.-% Aluminium, 3-10 Gew.-% Magnesium, 3-10 Gew.-% Silizium und als Rest Zink und unvermeidbare Verunreinigungen enthält, wobei das Aluminium/Zink-Verhältnis im Bereich von 0,89 bis 2,75 liegt und der Korrosionsschutzüberzug eine massige Mg₂Si-Phase aufweist. Zink kommt in diesem Überzug als Aluminium- und zinkangereichte, dendritische Phase vor, d.h. es werden keine durchgehenden Zinkschichten ausgebildet.

Davon ausgehend lag der Erfindung die Aufgabe zugrunde, ein in der Praxis einfach durchzuführendes Verfahren anzugeben, das es erlaubt, mit vergleichsweise geringem Aufwand ein Stahlbauteil herzustellen, welches mit einem gut haftenden und zuverlässig vor Korrosion schützenden metallischen Überzug versehen ist.

Diese Aufgabe ist gemäß einer ersten Variante der Erfindung dadurch gelöst, dass bei der Herstellung eines Stahlbauteils die in Anspruch 1 angegebenen Verfahrensschritte durchlaufen werden.

Eine alternative, die oben genannte Aufgabe ebenfalls lösende Variante des erfindungsgemäßen Verfahrens ist in Anspruch 2 angegeben.

Die erste Variante des erfindungsgemäßen Verfahrens betrifft das Formen des Stahlbauteils durch sogenanntes "direktes Warmumformen" (direktes Presshärten), während die zweite Verfahrensvariante das Formen des Stahlbauteils im sogenannten "indirekten Verfahren" (indirektes Presshärten) betrifft, bei dem eine erfindungsgemäß beschichtete Stahlplatine zunächst kaltumgeformt, dann auf Austenitisierungstemperatur erwärmt und anschließend durch rasches Abkühlen in den Vergütungs- oder Härtegefügezustand überführt wird.

Erfindungsgemäß wird das Stahlflachprodukt nach dem Beschichten mit dem Korrosionsschutzüberzug und vor dem Formen des Stahlbauteils aus der Platine einer Wärmebehandlung unterzogen, wobei das Stahlflachprodukt oder die Platine auf eine Temperatur im Bereich von 50°C bis 300°C erwärmt wird. Durch diese Maßnahme wird vor der eigentlichen Warmumformung ein sogenannter Alterungsprozess (künstliche Alterung) durchgeführt. Dies kann zum Beispiel in einem Durchlaufofen oder Haubenofen durch Erwärmung auf eine Temperatur in dem genannten Bereich von 50°C bis 300°C erfolgen. Hierdurch werden Diffusionsprozesse innerhalb des aus dem Stahlsubstrat und dem metallischen Überzug gebildeten Systems angeregt, wobei der Eisengehalt in dem Überzug nur geringfügig zunimmt. Der Nutzen dieser Maßnahme liegt zum Beispiel in der Ausbildung einer geeigneten Oxidschicht an der Oberfläche oder der allgemeinen Homogenisierung des Überzuges.

Vorteilhafte Ausgestaltungen der erfindungsgemäßen Verfahrensvarianten sind in den auf Anspruch 1 oder 2 rückbezogenen Ansprüchen angegeben und nachfolgend erläutert.

Bei einem erfindungsgemäßen Verfahren zum Herstellen eines mit einem metallischen, vor Korrosion schützenden Überzug versehenen Stahlbauteils, wird zunächst ein Stahlflachprodukt, d. h. ein Stahlband oder Stahlblech, zur Verfügung gestellt, das aus im Warmumformprozess durch Abschrecken härtbarem Stahlwerkstoff erzeugt ist. Dieser weist eine Streckgrenze von 150 bis 1100 MPa und eine Zugfestigkeit von 300 bis 1200 MPa auf.

Typischerweise kann es sich bei diesem Stahlwerkstoff um einen hochfesten Mangan-Bor-Stahl in an sich bekannter Zusammensetzung handeln. Dementsprechend kann der erfindungsgemäß verarbeitete Stahl neben Eisen und unvermeidbaren Verunreinigungen (in Gew.-%) 0,2 - 0,5 % C, 0,5 - 3,0 % Mn, 0,002-0,004 % B sowie optional eines oder mehrere Elemente der Gruppe "Si, Cr, Al, Ti" in folgenden Gehalten enthalten: 0,1-0,3 % Si, 0,1-0,5 % Cr, 0,02-0,05 % Al, 0,025-0,04 % Ti.

Das erfindungsgemäße Verfahren eignet sich zum Herstellen von Stahlbauteilen sowohl aus in konventioneller Weise nur warmgewalzten Warmband oder -blech als auch aus in konventioneller Weise kaltgewalztem Stahlband oder -blech.

Das entsprechend beschaffene und bereitgestellte Stahlflachprodukt wird mit einem Korrosionsschutzüberzug beschichtet, wobei dieser Überzug erfindungsgemäß aus einer Aluminium-Zink-Legierung gebildet ist, die 35 - 70 Gew.-% Aluminium, 35 - 60 Gew.-% Zink, 0,1 - 10 Gew.-% Si und bis zu 5 Gew.-% Fe enthält. Zudem kann diese Aluminium-Zink-Legierung vorzugsweise bis zu 15 Gew.-% weitere sauerstoffaffine Elemente, wie zum Beispiel Magnesium, Calcium, Nickel und/oder Mangan enthalten.

Die erfindungsgemäß verwendete Aluminium-Zink-Legierung kann mittels eines Feuerbeschichtungsprozesses, elektrolytisch oder mittels eines Stückbeschichtungsprozesses auf das bereitgestellte Stahlflachprodukt aufgebracht werden. Vorzugsweise erfolgt das Aufbringen der Aluminium-Zink-Legierung jedoch mittels eines kontinuierlichen Feuerbeschichtungsprozesses. Der metallische Überzug kann sowohl auf warm- als auch auf kaltgewalzten Stahlflachprodukten aufgebracht werden.

Analysen von erfindungsgemäß hergestellten Stahlflachprodukten sowie daraus durch Warmumformen (Presshärten) erzeugten Stahlbauteilen ergaben für deren metallischen Überzug nach einer Temperaturbehandlung bei 900°C folgende Schichtzusammensetzung (Schichtenfolge):
1. Außenschicht aus Aluminium-Eisen-Phasen mit zinkreichen Phasen,
2. Zwischenschicht aus einer aluminiumreichen Aluminium-Eisen-Verbindung,
3. Diffusionsschicht (Al-reicher Fe-Mischkristall), und
4. Stahlsubstrat (Mn- bzw. Mn-B-Stahl)

Der erfindungsgemäß verwendete Aluminium-Zink-Legierung bietet aufgrund des Zinkanteils einen aktiven Korrosionsschutz und gleichzeitig aufgrund des Aluminiumanteils einen passiven Korrosionsschutz.

Durch das Zulegieren von Elementen wie Magnesium und/oder Calcium lässt sich eine Reduzierung des Wasserstoffgehaltes infolge des Abbindens durch diese Elemente erreichen. Somit ist auch bei relativ hoher Ofenfeuchte eine sichere Fertigung, insbesondere Umformung, ohne die Gefahr einer verzögerten Rissbildung gewährleistet. Neben der positiven Eigenschaftsveränderung hinsichtlich einer Wasserstoffaufnahme im Vergleich zu bekannten Beschichtungskonzepten für die Warmumformung, ist es bei dem erfindungsgemäßen Verfahren bzw. dem erfindungsgemäßen Stahlbauteil ausdrücklich erwünscht, dass zumindest Teile der genannten Legierungselemente in dem Korrosionsschutzüberzug des Stahlbauteils beibehalten werden.

Magnesium bildet in dem erfindungsgemäß hergestellten Überzug zink-magnesiumreiche Phasen, welche einen Korrosionsschutz durch kathodische Opferwirkung wie bei Zinkbeschichtungen bereitstellen, wobei jedoch Korrosionsprodukte stabiler bei im Wesentlichen reinen Zinkbeschichtungen und daher eine Passivierung ermöglichen. Diesbezüglich ist anzumerken, dass das elektrochemische Spannungspotential von Magnesium kleiner ist als bei reinem Zink, so dass die Opferwirkung des Magnesiums im Vergleich zu Zink sogar verbessert ist. Der Magnesiumgehalt der erfindungsgemäß verwendeten Aluminium-Zink-Legierung liegt vorzugsweise im Bereich von 0,1 bis 10 Gew.-%.

Durch die Verwendung der oben definierten Aluminium-Zinklegierung in dem erfindungsgemäßen Verfahren wird zwar im Vergleich zu nahezu reinen Zinküberzügen bzw. Zinkschmelzen die Schmelztemperatur des Beschichtungsmaterials und damit der zum Aufrechterhalten der Metallschmelze erforderliche Energiebedarf angehoben, andererseits wird jedoch die Gefahr der zinkinfiltrierten Rissbildung in der Warmumformung erheblich reduziert. Die Band- bzw. Schmeizenbadtemperaturen werden bei der Durchführung des erfindungsgemäßen Verfahrens zwischen denen einer Feuerverzinkung mit minimal 85 Gew.-% Zinkanteil und denen einer Feueraluminisierung (AlSi-Beschichtung) liegen. Vorzugsweise liegen die Band- bzw. Schmelzenbadtemperaturen bei der Durchführung des erfindungsgemäßen Verfahrens im Bereich von 550°C bis 650°C.

Aufgrund der Herstellung des Korrosionsschutzüberzuges aus der oben definierten Aluminium-Zinklegierung wird die Kaltumformbarkeit der damit beschichteten Bänder bzw. Bleche aus Mangan-Bor-Stahl im Vergleich zu entsprechenden, eine AlSi-Beschichtung aufweisenden Stahlsubstraten verbessert, wodurch sich komplexere Bauteilgeometrien ohne Rissbildung verwirklichen lassen.

Nickel bewirkt eine Erhöhung der Schmelztemperatur des Überzuges, so dass dieser bei der Warmumformung des entsprechend beschichteten Stahlflachproduktes nicht zu weich wird oder sogar schmilzt. Darüber hinaus bewirkt Nickel, wie auch andere Elemente in dem Überzug, eine verbesserte Beschichtbarkeit des Überzuges. Der Nickelgehalt der erfindungsgemäß verwendeten Aluminium-Zink-Legierung liegt vorzugsweise im Bereich von 0,2 bis 10 Gew.-%.

Des Weiteren liegt eine Aufbringung von Nickel vor der eigentlichen Schmelztauchveredelung (Feuerbeschichtung) zur Verbesserung der Beschichtbarkeit des Flachstahlproduktes bzw. bei Stahlwerkstoffen mit schwieriger Benetzung im Rahmen der vorliegenden Erfindung. Das Aufbringen von Nickel kann dabei vorzugsweise mittels elektrolytischer Beschichtung erfolgen. Auf diese Weise lassen sich sehr dünne Nickelschichten auf dem Flachstahlprodukt abscheiden. Beispielsweise beträgt die Dicke der elektrolytisch aufgebrachten Nickelschicht mindestens 2 µm.

Die Zugabe von Mangan in die zur Herstellung des metallischen Korrosionsschutzüberzuges ergibt Vorteile bei der Warmumformung des entsprechend beschichteten Stahlflachproduktes. Zudem wird durch Mangan die Benetzbarkeit des Überzuges auf dem Stahlsubstrat verbessert. Der Mangangehalt der erfindungsgemäß verwendeten Aluminium-Zink-Legierung liegt vorzugsweise im Bereich von 0,1 bis 10 Gew.-%.

Silizium ist lediglich ein optionales Element der erfindungemäßen Aluminium-Zink-Legierung. Es wirkt als Diffusionsblocker und dient der Beruhigung des Schmelzenbades beim Aufbringen des aus der Aluminium-Zink-Legierung gebildeten Überzuges mittels Feuerbeschichtung. Der Siliziumgehalt der erfindungsgemäß verwendeten Aluminium-Zink-Legierung kann im Bereich von 0,1 bis 10 Gew.-% liegen.

Ein wesentlicher Vorteil des erfindungsgemäßen Korrosionsschutzüberzuges besteht darin, dass er aufgrund seines Aluminiumanteils lediglich eine geringe Rotrostbildung zulässt. Bei erfindungsgemäßer Einstellung der genannten Legierungselemente des erfindungsgemäßen Überzuges wird im Vergleich zu bislang bekannten metallischen Korrosionsschutzüberzügen ein geringer Rostanteil generiert. Die darüber hinaus optional in der Aluminium-Zink-Legierung enthaltenen weiteren Elemente, wie zum Beispiel Magnesium, Calcium, Nickel und/oder Mangan, die sich unter korrosiven Belastungen passiv verhalten, verbessern die Eigenschaften des Überzuges bzw. des erfindungsgemäß beschichteten Stahlflachprodukts, wie oben angegeben, weiter. Aufgrund stabiler zinkreicher Phasen, die innerhalb des erfindungsgemäßen Überzuges nach Warmumformung vorliegen, bietet dieser auch einen aktiven Korrosionsschutz. Wie oben beschrieben, hat der erfindungsgemäße Überzug im Vergleich zu bisherigen Korrosionsschutzüberzügen auf Zinkbasis, die mitunter an ihrer Oberfläche eine dünne Aluminiumoxidhaut aufweisen, einen hohen Aluminiumanteil über die gesamte Schichtdicke. Hierdurch wird die erwähnte Barrierewirkung erreicht. Darüber hinaus ergibt sich ein positiver Härteverlauf innerhalb des Überzuges.

Durch Anpassung der Schichtdickenauflage kann der Korrosionsschutz bei der Durchführung des erfindungsgemäßen Verfahrens variabel eingestellt werden. Dabei kann die Gesamtschichtdicke vor der Warmumformung im Bereich von 5 µm bis 50 µm liegen. Vorzugsweise liegt die Gesamtschichtdicke des erfindungsgemäßen Überzuges im Bereich von 10 µm bis 25 µm.

Nach einer weiteren vorteilhaften Ausgestaltung des erfindungsgemäßen Verfahrens wird das Stahlflachprodukt nach dem Beschichten mit dem Korrosionsschutzüberzug und vor dem Formen des Stahlbauteils einer Wärmebehandlung unterzogen, wobei das Stahlflachprodukt oder die Platine auf eine Temperatur im Bereich zwischen 300°C und 700°C, vorzugsweise zwischen 350°C und 600°C erwärmt wird, so dass sich eine Eisenanreicherung in dem Überzug ergibt. Durch einen solchen sogenannten Vorlegierungsprozess (> 300°C) wird bei der nachfolgenden Warmumformung die Verarbeitungszeit aufgrund der hohen Eisenanreicherung gesenkt. Nach dieser Wärmebehandlung (Vorlegierungsprozess) sollte die Fe-Konzentration in dem Überzug vorzugsweise mehr als 10 Gew.-% betragen. Eine Fe-Konzentration von maximal 85 Gew.-% sollte nicht überschritten werden.

Eine weitere vorteilhafte Ausgestaltung des erfindungsgemäßen Verfahrens sieht vor, dass das Erwärmen der Platine oder des Stahlbauteils in einer Ofenatmosphäre durchgeführt wird, die zwischen 5 Vol.-% und 25 Vol.-% Sauerstoff enthält. Eine weitere Optimierung zur Reduzierung der Wasserstoffaufnahme ergibt sich, wenn gemäß einer weiteren Ausgestaltung des erfindungsgemäßen Verfahrens das Erwärmen der Platine oder des Stahlbauteils in einer getrocknete Luft enthaltenden Ofenatmosphäre durchgeführt wird. Hierdurch wird die Ofenatmosphäre künstlich zu einem niedrigen Taupunkt geführt.

Nachfolgend wird die Erfindung anhand von Abbildungen und Beispielen weiter offenbart. Es zeigen:
- Abb. 1: einen Querschliff einer Probe eines erfindungsgemäß beschichteten Stahlsubstrats (Mn-B-Stahlsubstrats), wobei die Probe dem Ausgangszustand des beschichteten Stahlsubstrats entspricht;
- Abb. 2 - Abb. 4: jeweils einen Querschliff einer Probe eines erfindungsgemäß beschichteten Stahlsubstrats nach einer Erwärmung auf eine Temperatur von 700°C, 800°C bzw. 900°C und einer Liegezeit von jeweils 5 min; und
- Abb. 5: eine Probe eines erfindungsgemäß beschichteten Stahlsubstrats im Salzsprühtest nach einer Warmumformung mit 900°C und einer Liegezeit von 5 min, nach 48 h, 120 h, 192 h und 600 h, zur Veranschaulichung der Rotrostbildung.

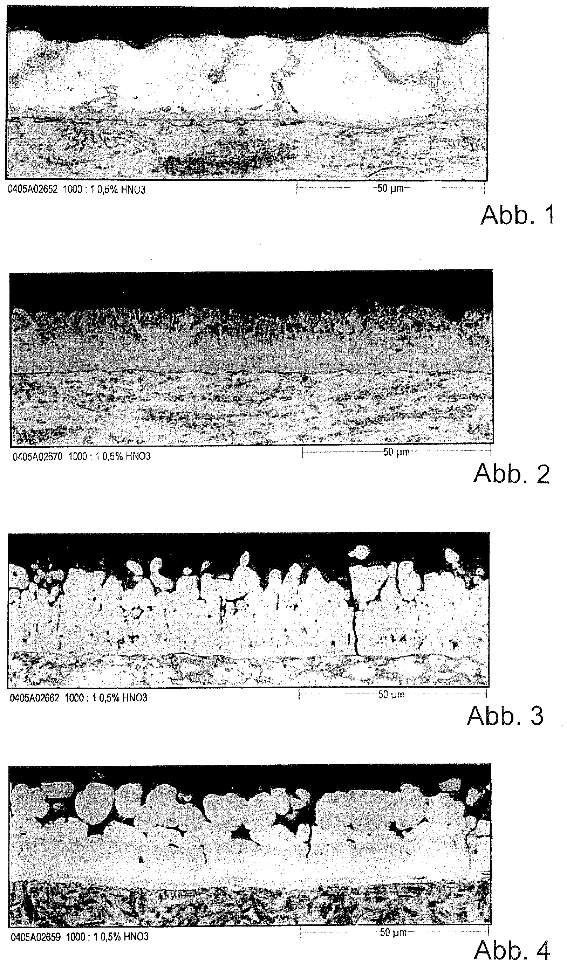

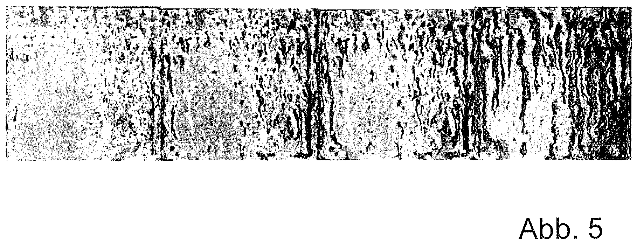

Die in der Abb. 4 im oberen Bereich des Überzuges zu erkennenden "dunklen Löcher" entstehen durch das Anätzen der Querschliffe. Ohne ein solches Anätzen würden an diesen Stellen zinkreiche Phasen vorliegen, wie der Abb. 5 entnommen werden kann. Die zinkreichen Phasen stellen den aktiven Korrosionsschutz über das Prozesszeitfenster (Verarbeitungszeitfenster) sicher.

### Beispiel 1:

Ein geglühtes Kaltband aus 0,3 - 3 Gew.-% Mangan enthaltenden Stahlwerkstoff, der eine Streckgrenze von 150 - 1100 MPa und eine Zugfestigkeit von 300 - 1200 MPa aufweist, wird alkalisch spritzentfettet und elektrolytisch entfettet. Das Entfettungsbad enthält in einer Konzentration von ca. 15 g/l einen handelsüblichen Reiniger, der mehr als 25% Natriumhydroxid, 1 - 5 % eines Fettalkoholethers und 5 - 10% eines ethoxylierten, propoxylierten und methylierten C12-18 Alkohols aufweist. Die Badtemperatur beträgt ca. 65°C. Die Verweildauer in der Spritzentfettung beträgt 5 s. Daran schließt sich eine Bürstreinigung an. Im weiteren Verlauf wird das Band einer Schmelztauchbeschichtung (Feuerbeschichtung) unterworfen. Die metallische Schmelze ist aus einer Aluminium-Zink-Legierung gebildet, die 35 - 70 Gew.-% Aluminium, 35 - 60 Gew.-% Zink, 0,1 - 10 Gew.-% Magnesium, 0,1 bis zu 10 Gew.-% Si und bis zu 5 Gew.-% Fe enthält. Zudem enthält die Aluminium-Zink-Legierung vorzugsweise Mangan und/oder Nickel in einem Gesamtanteil von max. 15 Gew.-%, wobei der Mangananteil bis zu 0,02 Gew.-% betragen kann. Die Gesamtschichtdicke des aus der Aluminium-Zink-Legierung gebildeten Überzuges wird durch eine Abstreifeinrichtung, beispielsweise Abstreifdüsen, auf eine Dicke im Bereich von 5 bis 50 µm, bevorzugt 10 bis 25 µm eingestellt. Das so beschichtete Band wird dann zu einem Coil aufgewickelt oder in Platinen bestimmter Länge abgelängt, und nach einer optionalen Zwischenlagerung einer Umformpresse zur Herstellung dreidimensional geformter, pressgehärteter Stahlbauteile zugeführt. Der Umformpresse ist eine Zuschneideeinrichtung vorgeschaltet, mittels der aus dem abgewickelten Coil bzw. den vorgeschnittenen, typischerweise rechteckigen Platinen an die Kontur des herzustellenden Stahlbauteils angepasste Platinen zugeschnitten werden. Die zugeschnittenen Platinen werden sodann auf eine oberhalb der Austenitisierungstemperatur des Stahlsubstrats liegende Verformungstemperatur erwärmt und im erwärmten Zustand in das Werkzeug der Umformpresse gelegt. Im Zuge der Umformung erfährt der Blechzuschnitt bzw. das aus ihm geformte Bauteil durch den Kontakt mit dem gekühlten Werkzeug eine schnelle Abkühlung. Die Abkühlraten sind dabei so eingestellt, dass sich im Bauteil ein Vergütungs- oder Härtegefüge ergibt.

### Beispiel 2:

Warmband (gebeizt) der Güte 22MnB5 (1.5528) wird alkalisch spritzentfettet und elektrolytisch entfettet. Zusätzlich erfährt das Band in der alkalischen Spritzentfettung eine Bürstreinigung. Das Entfettungsbad enthält in einer Konzentration von ca. 20 g/l einen handelüblichen Reiniger, der 5 -10 % Natriumhydroxid und 10 - 20 % Kaliumhydroxid enthält. Die Badtemperatur beträgt ca. 75°C. Im weiteren Verlauf wird das Band einer Schmelztauchbeschichtung (Feuerbeschichtung) unterworfen. Die metallische Schmelze ist aus einer Aluminium-Zink-Legierung gebildet, die 35 - 70 Gew.-% Aluminium, 35 - 60 Gew.-% Zink, 0,1 - 10 Gew.-% Magnesium, 0,1 bis zu 10 Gew.-% Si und bis zu 5 Gew.-% Fe enthält. Zudem enthält die Aluminium-Zink-Legierung vorzugsweise Mangan und/oder Nickel in einem Gesamtanteil von max. 15 Gew.-%, wobei der Mangananteil bis zu 0,02 Gew.-% betragen kann. Die Gesamtschichtdicke des metallischen Überzuges wird mittels einer Abstreifeinrichtung, z.B. mittels Druckluft- oder Inertgasdüsen, auf eine Dicke im Bereich von 5 bis 50 µm, vorzugsweise 10 bis 25 µm eingestellt. Das beschichtete Band wird dann zu einem Coil aufgewickelt oder in Platinen bestimmter Länge abgelängt, und nach einer optionalen Zwischenlagerung einer Umformpresse zur Herstellung pressgehärteter Stahlbauteile zugeführt. Der Umformpresse ist eine Zuschneideeinrichtung vorgeschaltet, mittels der aus dem abgewickelten Coil bzw. den vorgeschnittenen, typischerweise rechteckigen Platinen an die Kontur des herzustellenden Stahlbauteils angepasste Platinen zugeschnitten werden. Die zugeschnittenen Platinen werden dann bei Raumtemperatur in die Form oder eine Vorform des herzustellenden Stahlbauteils umgeformt (Kaltumformung). Anschließend wird das (vorgeformte) Bauteil auf eine oberhalb der Austenitisierungstemperatur des Stahls liegende Bauteiltemperatur erwärmt und im erwärmten Zustand in ein gekühltes Formwerkzeug der Umformpresse gelegt. In dem gekühlten Werkzeug wird das Bauteil gegebenenfalls fertigt geformt. Durch den Kontakt mit dem gekühlten Werkzeug erfährt das Bauteil eine rasche Abkühlung, so dass sich im Bauteil ein Vergütungs- oder Härtegefüge einstellt.

### Beispiel 3:

Wie Beispiel 1 oder 2, jedoch mit dem Unterschied, dass nach der Beschichtung und vor der Umformung (Presshärtung) ein sogenannter Vorlegierungsprozess durchgeführt wird. Hierzu wird das Stahlflachprodukt oder die Platine auf eine Temperatur im Bereich zwischen 300°C und 650°C, vorzugsweise zwischen 350°C und 600°C erwärmt, so dass sich in dem Korrosionsschutzüberzug durch Diffusionsprozesse eine Eisenanreicherung ergibt.

### Beispiel 4:

Wie Beispiel 1 oder 2, jedoch mit dem Unterschied, dass nach der Beschichtung und vor der Umformung (Presshärtung) ein sogenannter Alterungsprozess durchgeführt wird. Hierzu wird das Stahlflachprodukt oder die Platine in einem Durchlaufglühofen oder einem Haubenofen auf eine Temperatur im Bereich von 50°C bis 300°C erwärmt.

### Beispiel 5:

Wie Beispiel 1, 2, 3 oder 4, jedoch mit dem Unterschied, dass vor dem Beschichten des Stahlflachprodukts mit dem aus der Aluminium-Zink-Legierung gebildeten Überzug zunächst ein Nickel enthaltende Beschichtung auf das Stahlflachprodukt aufgebracht wird. Die Nickelschicht verbessert die Beschichtbarkeit des Stahlsubstrats. Das Aufbringen des Nickelüberzuges (Basisschicht) erfolgt vorzugsweise elektrolytisch. Die Schichtdicke des Nickelüberzuges wird beispielsweise auf eine Dicke im Bereich von 1 µm bis 3 µm eingestellt.

Optimale Arbeitsergebnisse ergeben sich bei den oben genannten Beispielen, wenn die Platinen- bzw. Bauteiltemperatur in an sich bekannter Weise maximal 940 °C, insbesondere 830 - 905 °C, beträgt. Dies gilt insbesondere dann, wenn das Formen des Stahlbauteils als Warmumformung im Anschluss an die Erwärmung auf die Platinen- bzw. Bauteiltemperatur so durchgeführt wird, dass die erwärmte Platine ("direktes" Verfahren) bzw. das erwärmte Stahlbauteil ("indirektes" Verfahren) unter Inkaufnahme eines gewissen Temperaturverlustes in das jeweils anschließend genutzte Formwerkzeug gelegt wird. Besonders betriebssicher lässt sich die jeweils abschließende Warmumformung dann durchführen, wenn die Platinen- bzw. Bauteiltemperatur 850 - 880 °C beträgt.

Die Erwärmung auf die Platinen- bzw. Bauteiltemperatur kann in an sich bekannter Weise im Durchlauf in einem Durchlaufofen erfolgen. Typische Glühzeiten liegen dabei im Bereich von 3 -15 min. Alternativ ist es jedoch auch möglich, die Erwärmung mittels einer induktiv oder konduktiv arbeitenden Erwärmungseinrichtung vorzunehmen. Dies erlaubt eine schnelle Erwärmung auf die jeweils vorgegebene Temperatur.

Während der Erwärmung sollte die Ofenatmosphäre zwischen 17% und 23% Sauerstoff enthalten. Eine weitere Optimierung zur Reduzierung der Wasserstoffaufnahme des erfindungsgemäß beschichteten Stahlsubstrats kann durch Einleitung von getrockneter Luft erfolgen. Hierdurch wird die Ofenatmosphäre künstlich zu einem niedrigen Taupunkt geführt.

## Patentansprüche

1. Verfahren zum Herstellen eines mit einem metallischen, vor Korrosion schützenden Überzug versehenen Stahlbauteils, umfassend folgende Arbeitsschritte:
a) Zurverfügungstellen eines Stahlflachprodukts, das aus einem Stahlwerkstoff erzeugt ist, der eine Streckgrenze von 150 - 1100 MPa und eine Zugfestigkeit von 300 - 1200 MPa aufweist;
b) Beschichten des Stahlflachprodukts mit einem Korrosionsschutzüberzug, der aus einer Aluminium-Zink-Legierung gebildet ist, die 35 - 70 Gew.-% Aluminium, 35 - 60 Gew.-% Zink, 0,1 - 10 Gew.-% Mg, bis zu 10 Gew.-% Si und bis zu 5 Gew.-% Fe enthält;
c) Erwärmen einer aus dem beschichteten Stahlflachprodukt gebildeten Platine auf eine mindestens 800°C betragende Platinentemperatur;
d) Formen des Stahlbauteils aus der Platine in einem Formwerkzeug, und
e) Härten des Stahlbauteils durch Abkühlen von einer Temperatur, bei der sich das Stahlbauteil in einem für die Ausbildung von Vergütungs- oder Härtegefüge geeigneten Zustand befindet, mit einer Abkühlrate, die zur Ausbildung des Vergütungs- oder Härtegefüges ausreicht,
wobei das Stahlflachprodukt nach dem Beschichten mit dem Korrosionsschutzüberzug, der aus einer Aluminium-Zink-Legierung gebildet ist (Arbeitsschritt b)), und vor dem Formen des Stahlbauteils aus der Platine einer Wärmebehandlung unterzogen wird, wobei das Stahlflachprodukt oder die Platine auf eine Temperatur im Bereich von 50°C bis 300°C erwärmt wird.

2. Verfahren zum Herstellen eines mit einem metallischen, vor Korrosion schützenden Überzug versehenen Stahlbauteils, umfassend folgende Arbeitsschritte:
a) Zurverfügungstellen eines Stahlflachprodukts, das aus einem Stahlwerkstoff erzeugt ist, der eine Streckgrenze von 150 - 1100 MPa und eine Zugfestigkeit von 300 - 1200 MPa aufweist;
b) Beschichten des Stahlflachprodukts mit einem Korrosionsschutzüberzug, der aus einer Aluminium-Zink-Legierung gebildet ist, die 35 - 70 Gew.-% Aluminium, 35 - 60 Gew.-% Zink, 0,1 - 10 Gew.-% Mg, bis zu 10 Gew.-% Si und bis zu 5 Gew.-% Fe enthält;
c) Formen des Stahlbauteils aus einer aus dem Stahlflachprodukt gebildeten Platine in einem Formwerkzeug,
d) Erwärmen des Stahlbauteils auf eine mindestens 800°C betragende Bauteiltemperatur; und
e) Härten des Stahlbauteils durch Abkühlen von einer Temperatur, bei der sich das Stahlbauteil in einem für die Ausbildung von Vergütungs- oder Härtegefüge geeigneten Zustand befindet, mit einer Abkühlrate, die zur Ausbildung des Vergütungs- oder Härtegefüges ausreicht,
wobei das Stahlflachprodukt nach dem Beschichten mit dem Korrosionsschutzüberzug, der aus einer Aluminium-Zink-Legierung gebildet ist (Arbeitsschritt b)), und vor dem Formen des Stahlbauteils aus der Platine einer Wärmebehandlung unterzogen wird, wobei das Stahlflachprodukt oder die Platine auf eine Temperatur im Bereich von 50°C bis 300°C erwärmt wird.

3. Verfahren nach Anspruch 2, **dadurch gekennzeichnet, dass** das Formen des Stahlbauteils (Arbeitsschritt c)) als Vorformen ausgeführt wird und dass das Stahlbauteil nach dem Erwärmen (Arbeitsschritt d)) fertig geformt wird.

4. Verfahren nach einem der voranstehenden Ansprüche, **dadurch gekennzeichnet, dass** die zur Bildung des Korrosionsschutzüberzug verwendete Aluminium-Zink-Legierung bis zu 15 Gew.-% Elemente aus der Calcium, Nickel, Mangan und/oder andere Erdalkalimetalle umfassenden Gruppe enthält.

5. Verfahren nach einem der voranstehenden Ansprüche, **dadurch gekennzeichnet, dass** vor dem Beschichten des Stahlflachprodukts mit dem Korrosionsschutzüberzug, der aus einer Aluminium-Zink-Legierung gebildet ist (Arbeitsschritt b)), zunächst ein Nickel enthaltender Überzug auf dem Stahlflachprodukt aufgebracht wird.

6. Verfahren nach einem der voranstehenden Ansprüche, **dadurch gekennzeichnet, dass** das Stahlflachprodukt nach dem Beschichten mit dem Korrosionsschutzüberzug, der aus einer Aluminium-Zink-Legierung gebildet ist (Arbeitsschritt b)), und vor dem Formen des Stahlbauteils aus der Platine einer Wärmebehandlung unterzogen wird, wobei das Stahlflachprodukt oder die Platine auf eine Temperatur im Bereich zwischen 300°C und 700°C, vorzugsweise zwischen 350°C und 600°C erwärmt wird, so dass sich eine Eisenanreicherung im Korrosionsschutzüberzug ergibt.

7. Verfahren nach einem der voranstehenden Ansprüche, **dadurch gekennzeichnet, dass** der Korrosionsschutzüberzug nach einer Temperaturbehandlung im Bereich von 830 - 940°C von seiner Außenseite in Richtung des Stahlflachprodukts folgende Schichtenfolge aufweist:
• Außenschicht aus Aluminium-Eisen-Phasen mit zinkreichen Phasen,
• Zwischenschicht aus einer aluminiumreichen Aluminium-Eisen-Verbindung, und
• Diffusionsschicht aus einem aluminiumreichen Eisenmischkristall.

8. Verfahren nach einem der voranstehenden Ansprüche, **dadurch gekennzeichnet, dass** die Gesamtschichtdicke des Korrosionsschutzüberzuges so eingestellt wird, dass diese vor dem Erwärmen auf eine mindestens 800°C betragende Platinen- oder Bauteiltemperatur im Bereich von 5 µm bis 50 µm, vorzugsweise im Bereich von 10 µm bis 25 µm liegt.

9. Verfahren nach einem der voranstehenden Ansprüche, **dadurch gekennzeichnet, dass** das Erwärmen der Platine oder des Stahlbauteils in einer Ofenatmosphäre durchgeführt wird, die zwischen 5 Vol.-% und 25 Vol.-% Sauerstoff enthält.

10. Verfahren nach einem der voranstehenden Ansprüche, **dadurch gekennzeichnet, dass** das Erwärmen der Platine oder des Stahlbauteils in einer getrocknete Luft enthaltenden Ofenatmosphäre durchgeführt wird.

11. Verfahren nach einem der voranstehenden Ansprüche, **dadurch gekennzeichnet, dass** der aus einer Aluminium-Zink-Legierung gebildete Korrosionsschutzüberzug mittels Feuerbeschichtung auf das Stahlflachprodukt aufgebracht wird.

## Claims

1. A method for producing a steel component provided with a metallic coating providing protection from corrosion, said method comprising the following worksteps:
a) providing a flat steel product produced from a steel material which has a yield point of 150 - 1100 MPa and a tensile strength of 300 - 1200 MPa;
b) coating the flat steel product with an anticorrosion coating composed of an aluminum-zinc alloy which comprises 35 - 70 wt% aluminum, 35 - 60 wt% zinc, 0.1 - 10 wt% Mg, up to 10 wt% Si, and up to 5 wt% Fe;
c) heating a blank composed of the coated flat steel product to a blank temperature of at least 800°C;
d) forming the steel component from the blank in a forming tool; and
e) hardening the steel component by cooling from a temperature at which the steel component is in a state suitable for the development of tempered microstructure or hardened microstructure, at a cooling rate sufficient to develop the tempered or hardened microstructure,
wherein after the flat steel product has been coated with the anticorrosion coating composed of an aluminum-zinc alloy (workstep b)), and before the steel component is formed from the blank, the flat steel product or the blank is subjected to a heat treatment in which it is heated to a temperature in the range from 50°C to 300°C.

2. A method for producing a steel component provided with a metallic coating providing protection from corrosion, said method comprising the following worksteps:
a) providing a flat steel product produced from a steel material which has a yield point of 150 - 1100 MPa and a tensile strength of 300 - 1200 MPa;
b) coating the flat steel product with an anticorrosion coating composed of an aluminum-zinc alloy which comprises 35 - 70 wt% aluminum, 35 - 60 wt% zinc, 0.1 - 10 wt% Mg, up to 10 wt% Si, and up to 5 wt% Fe;
c) forming the steel component from a blank, composed of the flat steel product, in a forming tool;
d) heating the steel component to a component temperature of at least 800°C; and
e) hardening the steel component by cooling from a temperature at which the steel component is in a state suitable for the development of tempered microstructure or hardened microstructure, at a cooling rate sufficient to develop the tempered or hardened microstructure,
wherein after the flat steel product has been coated with the anticorrosion coating composed of an aluminum-zinc alloy (workstep b)), and before the steel component is formed from the blank, the flat steel product or the blank is subjected to a heat treatment in which it is heated to a temperature in the range from 50°C to 300°C.

3. The method as claimed in claim 2, **characterized in that** the forming of the steel component (workstep c)) is performed as preliminary forming and **in that** the steel component is formed to a finished state after heating (workstep d)).

4. The method as claimed in any of the preceding claims, **characterized in that** the aluminum-zinc alloy used to constitute the anticorrosion coating comprises up to 15 wt% of elements from the group encompassing calcium, nickel, manganese and/or other alkaline earth metals.

5. The method as claimed in any of the preceding claims, **characterized in that** before the flat steel product is coated with the anticorrosion coating composed of an aluminum-zinc alloy (workstep b)), a nickel-containing coating is first applied to the flat steel product.

6. The method as claimed in any of the preceding claims, **characterized in that** after the flat steel product has been coated with the anticorrosion coating composed of an aluminum-zinc alloy (workstep b)), and before the steel component is formed from the blank, the flat steel product or the blank is subjected to a heat treatment in which it is heated to a temperature in the range between 300°C and 700°C, preferably between 350°C and 600°C, to produce an accumulation of iron in the anticorrosion coating.

7. The method as claimed in any of the preceding claims, **characterized in that** the anticorrosion coating, after a temperature treatment in the range of 830 - 940°C, has the following layer sequence from its outside in the direction of the flat steel product:
• outer layer of aluminum-iron phases with zinc-rich phases,
• interlayer of an aluminum-rich aluminum-iron compound, and
• diffusion layer of an aluminum-rich iron solid solution.

8. The method as claimed in any of the preceding claims, **characterized in that** the total layer thickness of the anticorrosion coating is set such that, prior to the heating to a blank or component temperature of at least 800°C, said thickness is in the range from 5 µm to 50 µm, preferably in the range from 10 µm to 25 µm.

9. The method as claimed in any of the preceding claims, **characterized in that** the heating of the blank or of the steel component is carried out in an oven atmosphere which comprises between 5 vol% and 25 vol% oxygen.

10. The method as claimed in any of the preceding claims, **characterized in that** the heating of the blank or of the steel component is carried out in an oven atmosphere comprising dried air.

11. The method as claimed in any of the preceding claims, **characterized in that** the anticorrosion coating composed of an aluminum-zinc alloy is applied to the flat steel product by means of hot dip coating.

## Revendications

1. Procédé de fabrication d'un composant en acier, munie d'un revêtement protégeant contre la corrosion, comprenant les étapes suivantes:
a) la mise à disposition d'un produit en acier plat, qui est produit à partir d'un acier présentant une limite d'élasticité allant de 150 à 1100 MPa et une résistance en traction allant de 300 à 1200 MPa;
b) le revêtement du produit en acier plat avec un revêtement protégeant contre la corrosion, constitué d'un alliage d'aluminium et de zinc, qui contient 35 à 70% en poids d'aluminium, 35 à 60% en poids de zinc, 0,1 à 10% en poids de Mg, jusqu'à 10% en poids de Si et jusqu'à 5% en poids de Fe;
c) le chauffage d'une plaque formée du produit en acier plat revêtu à une température de la plaque atteignant au moins 800°C;
d) la mise en forme du composant en acier à partir de la plaque dans un outil de moulage, et
e) le durcissement du composant en acier par refroidissement d'une température à laquelle le composant en acier se trouve dans un état approprié pour la formation de structures de revenu ou de trempe, à une vitesse de refroidissement qui permet la formation de structures de revenu ou de trempe,
où, après l'application du revêtement protégeant contre la corrosion, qui est formé d'un alliage aluminium-zinc (étape b) et avant la mise en forme du composant en acier à partir de la plaque, le produit en acier plat est soumis à un traitement thermique où le produit en acier plat ou la plaque est chauffé à une température située dans l'intervalle allant de 50°C à 300°C.

2. Procédé de fabrication d'un composant en acier, munie d'un revêtement protégeant contre la corrosion, comprenant les étapes suivantes:
a) la mise à disposition d'un produit en acier plat, qui est produit à partir d'un acier présentant une limite d'élasticité allant de 150 à 1100 MPa et une résistance en traction allant de 300 à 1200 MPa;
b) le revêtement du produit en acier plat avec un revêtement protégeant contre la corrosion, constitué d'un alliage d'aluminium et de zinc, qui contient 35 à 70% en poids d'aluminium, 35 à 60% en poids de zinc, 0,1 à 10% en poids de Mg, jusqu'à 10% en poids de Si et jusqu'à 5% en poids de Fe;
c) la mise en forme du composant en acier à partir d'une plaque formée d'un produit en acier plat dans un outil de moulage;
d) le chauffage du composant en acier à une température du composant atteignant au moins 800°C;
e) le durcissement du composant en acier par refroidissement d'une température à laquelle le composant en acier se trouve dans un état approprié pour la formation de structures de revenu ou de trempe, à une vitesse de refroidissement qui permet la formation de structures de revenu ou de trempe,
où, après l'application du revêtement protégeant contre la corrosion, qui est formé d'un alliage aluminium-zinc (étape b) et avant la mise en forme du composant en acier à partir de la plaque, le produit en acier plat est soumis à un traitement thermique où le produit en acier plat ou la plaque est chauffé à une température située dans l'intervalle allant de 50°C à 300°C.

3. Procédé selon la revendication 2, **caractérisé en ce que** le moulage du composant en acier (étape c) est un préformage et **en ce que** le composant en acier est terminée après le chauffage (étape d).

4. Procédé selon l'une quelconque des revendications précédentes, **caractérisé en ce que** l'alliage aluminium-zinc utilisé pour la formation du revêtement protégeant contre la corrosion contient jusqu'à 15% en poids d'éléments parmi le groupe comprenant le calcium, le nickel, le manganèse et/ou d'autre métaux alcalino-terreux.

5. Procédé selon l'une quelconque des revendications précédentes, **caractérisé en ce qu'**avant l'application du revêtement protégeant contre la corrosion, qui est composé d'un alliage aluminium-zinc (étape b) sur le composant en acier, un revêtement contenant du nickel est d'abord appliqué sur le produit en acier plat.

6. Procédé selon l'une quelconque des revendications précédentes, **caractérisé en ce qu'**après l'application du revêtement protégeant contre la corrosion, qui est composé d'un alliage aluminium-zinc (étape b) et avant la mise en forme du composant en acier à partir de la plaque, le produit en acier plat est soumis à un traitement thermique, où le produit en acier plat ou la plaque est chauffé à une température située dans l'intervalle allant de 300°C à 700°C, de préférence de 350°C à 600°C, de manière à produire un enrichissement en fer dans la couche de protection contre la corrosion.

7. Procédé selon l'une quelconque des revendications précédentes, **caractérisé en ce qu'**après un traitement thermique dans la plage allant de 830 à 940°C, le revêtement protégeant contre la corrosion présente sur sa face extérieure, la succession suivante de couches en direction du produit en acier plat:
- couche externe en phases aluminium-fer avec phases riches en zinc,
- couche intermédiaire en un composé aluminium-fer riche en aluminium, et
- couche de diffusion en un cristal mixte de fer riche en aluminium.

8. Procédé selon l'une quelconque des revendications précédentes, **caractérisé en ce que** l'épaisseur totale du revêtement protégeant contre la corrosion est ajusté de telle sorte qu'elle se situe dans l'intervalle allant de 5 µm à 50 µm, de préférence de 10 µm à 25 µm avant le chauffage à une température de plaque ou de pièce en acier atteignant au moins 800°C.

9. Procédé selon l'une quelconque des revendications précédentes, **caractérisé en ce que** le chauffage de la plaque ou du composant en acier est réalisé dans une atmosphère de four qui contient de 5% en volume à 25% en volume d'oxygène.

10. Procédé selon l'une quelconque des revendications précédentes, **caractérisé en ce que** le chauffage de la plaque ou du composant en acier est réalisé dans une atmosphère de four contenant de l'air séché.

11. Procédé selon l'une quelconque des revendications précédentes, **caractérisé en ce que** le revêtement protégeant contre la corrosion formé d'un alliage aluminium-zinc est appliqué sur le produit en acier plat par revêtement à chaud par trempage.
